# EUROPÄISCHE PATENTANMELDUNG

(11) **EP 0 588 024 A1**
(43) Veröffentlichungstag der Anmeldung: **23.03.1994**
(21) Anmeldenummer: 93111731.1
(22) Anmeldetag: 22.07.1993
(51) Int. Cl.: G01N 33/00, G01N 31/16, G01N 21/82

(54) **Methode zur Schnellcharakterisierung von Alkylpolyglycosiden**

(30) Priorität: 17.09.1992 DE 4231038
(71) Anmelder: HÜLS AKTIENGESELLSCHAFT, D-45764 Marl (DE)
(72) Erfinder: Balzer, Dieter, Dr., D-45721 Haltern (DE)

(57) **Zusammenfassung**

Die Erfindung betrifft eine Methode zur Schnellcharakterisierung von Alkylpolyglycosiden der Formel

R-O-Z_{n,}

in der R für einen linearen oder verzweigten, gesättigten oder ungesättigten Alkylrest mit 8 bis 20 Kohlenstoffatomen und Zₙ für einen (Oligo)glycosylrest mit im Mittel n = 1 bis 5 Hexose- und/oder Pentoseeinheiten oder Gemische davon steht, wobei man das Alkylpolyglycosid in wäßriger Lösung bis zur Klärung oder Trübung bei festgelegter Temperatur mit einem Agens titriert oder nach Hinzufügen eines Agens den Trübungspunkt bestimmt.

## Beschreibung

Zur Charakterisierung chemischer Produkte sind Schnellbestimmungen sowohl im Betrieb als auch zur Ausgangs- bzw. Eingangskontrolle sehr willkommen.

Dies gilt besonders, wenn sie trotz einfacher Durchführung in kurzer Zeit eine weitgehende Substanzcharakterisierung gestatten.

Ein Beispiel zur schnellen Charakterisierung für Tenside ist der Trübungspunkt der Oxethylate von Fettalkoholen, Alkylphenolen, Fettaminen und ähnlichen H-aciden Verbindungen in wäßriger Lösung gemäß DIN 53 917. Diese leicht und schnell zu bestimmende Meßgröße steht in engem Zusammenhang zur Struktur und damit auch zu den anwendungstechnischen Eigenschaften des Oxethylates. Der Trübungspunkt stellt eine ideale Schnellcharakterisierung dieser Tenside dar und dient auch als Spezifikation bei Handelsprodukten.

Eine andere Gruppe nichtionischer Tenside, die in jüngster Zeit aufgrund ökologischer und anwendungstechnischer Eigenschaften sehr großes Interesse gefunden haben, sind die Alkylpolyglycoside.
Sie lassen sich mittels Direktsynthese auf der Basis nachwachsender Rohstoffe aus Stärke bzw. deren Folgeprodukte wie z. B. D-Glukose und Fettalkoholen herstellen. Neben der Direktsynthese existiert ein zweistufiges Verfahren (E. Fischer, Chem. Ber. 28, 1145 (1895), bei dem in Gegenwart von Säurekatalysatoren zunächst Monosaccharide mit niederen Alkoholen zu entsprechenden Alkylglycosiden reagieren, die sodann mit überschüssigem Fettalkohol zu den gewünschten Alkylglycosiden umglykosidiert werden.

Die Alkylpolyglycoside beider Verfahren zeigen eine außerordentlich komplexe Zusammensetzung, so daß sie sich im Gegensatz zu den Oxethylaten nicht durch eine einfache Verteilungsfunktion beschreiben lassen. Drei Isomeriearten bestimmen das Produktspektrum:
Stereoisomerie mit α- und β-Anomeren, Bindungsisomerie, wobei 1,6 - und 1,4 interglycosidische Verknüpfungen gegenüber 1,2 - und 1,3 bevorzugt sind, als auch Ringisomerie; neben den Pyranosiden als Hauptprodukt lassen sich merkliche Mengen an Furanosiden nachweisen.

Danach tritt schon z. B. das Alkylmonoglucosid in 4 verschiedenen Isomerformen auf, bei dem Alkyldiglucosid muß bereits mit 30 und bei den Alkyltriglucosiden mit einigen 100 isomeren Formen gerechnet werden (vgl. D. Balzer, Tenside Surf. Det. 28, 419 (1991). Nun zeigen Hochtemperaturgaschromatogramme, daß ein C8C10-Glucosid mit einem mittleren Glucosidierungsgrad von 1,9 alle Oligoglucoside einschließlich Oktaglucoside enthält; die enorme und im Vergleich zu anderen Tensiden unvergleichliche Komplexität des Produktspektrums mit praktisch unendlich vielen Isomeren wird daher deutlich. Die Situation gestaltet sich noch dramatischer, wenn man berücksichtigt, daß die Isomeren ein und desselben Polymerisationsgrades recht verschiedene Eigenschaften haben.

Aus der Darstellung folgt, daß eine quantitative Stoffbeschreibung der Alkylpolyglycoside außerordentlich schwierig ist, auch wenn man die synthesebedingten Nebenprodukte wie z. B. Butylglycoside, Fettalkohole, Oligoglucosen, katalysebedingte Salze, etc. unberücksichtigt läßt. Umso mehr ist eine Charakterisierung wünschenswert, die produktions- und anwendungsbedingt auch möglichst schnell durchführbar ist.

Eine Möglichkeit der Schnellcharakterisierung besteht in einem sogenannten "Salinity Scan" (vgl. DE 38 17 039). Das Verfahren besteht im Aufsuchen des Existenzbereichs der mittelphasigen Mikroemulsion in Gegenwart des zu charakterisierenden Alkylpolyglycosids, eines Cosolvents, eines hydrophoben organischen Lösemittels und Wasser bzw. wäßriger Elektrolytlösung. Diese Methode besitzt zwar bei ein und dem selben APG eine gute Reproduzierbarkeit, zeigt jedoch bei Produkten mit gleicher Alkylkettenlänge und gleichem Glycosidierungsgrad bei ansonsten weitestgehend identischen Produkteigenschaften unerklärbare deutliche Differenzen. Außerdem ist die Methode für eine Schnellcharakterisierung doch zu langsam. Wünschenswert wäre daher eine Charakterisierung ähnlich der Trübungspunktmessung bei den Oxethylaten.

Nun wird in der Literatur mehrfach darauf hingewiesen, daß Alkylpolyglycoside bzw. ihre technisch interessanten Vertreter, die Alkylpolyglucoside, keinen Trübungspunkt haben bzw. dieser nicht meßbar ist (vgl. F.A. Hughes u. B.W. Lew, JAOCS 47, 162 (1970), C.F. Putnik u. N.F. Borys, Soap. Cosm. Chem. Spec. 6, 34 (1986), P.A. Siracusa, Happi 4/1992, 100).

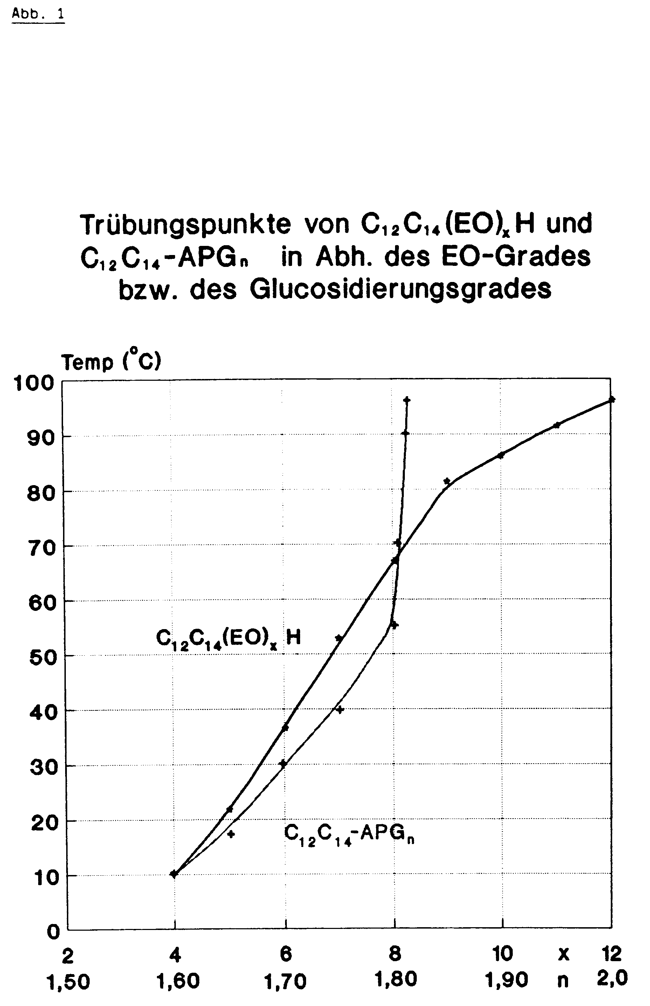

Bei grundlegenden Untersuchungen zum Phasenverhalten von C12C14-Alkylpolyglucosiden ist es uns nun gelungen, Trübungspunkte in ganz bestimmten engen Strukturbereichen aufzufinden. Im Gegensatz zu den Oxethylaten, bei denen eine Variation des EO-Grades um mehrere EO-Einheiten nur eine mittlere Veränderung des Trübungspunktes zur Folge hat, sind die entsprechenden Abhängigkeiten bei den Alkylpolyglucosiden etwa um den Faktor 40 empfindlicher. Bereits eine relativ geringfügige Erhöhung des Glucosidierungsgrades um 0,2 Einheiten läßt den Trübungspunkt um ca. 90 °C steigen. Um bei Oxethylaten gleicher Alkylkettenlänge eine ähnliche Trübungspunkterhöhung zu erzielen, sind EO-Graderhöhungen von ca. 8 Einheiten notwendig (Abb. 1).

Die Lage des Trübungspunktes reagiert also außerordentlich empfindlich auf sehr geringfügige Strukturänderungen der Alkylpolyglucoside. Diese Beobachtung erklärt auch, warum in früheren Arbeiten mit Alkylpolyglucosiden Trübungspunkte übersehen wurden, letztere lagen entweder unterhalb der Krafftpunktkurve oder oberhalb des üblichen Beobachtungsbereiches (> 100 ⁰C) (vgl. D. Balzer, Tenside Surf. Det. 28, 419 (1991)).

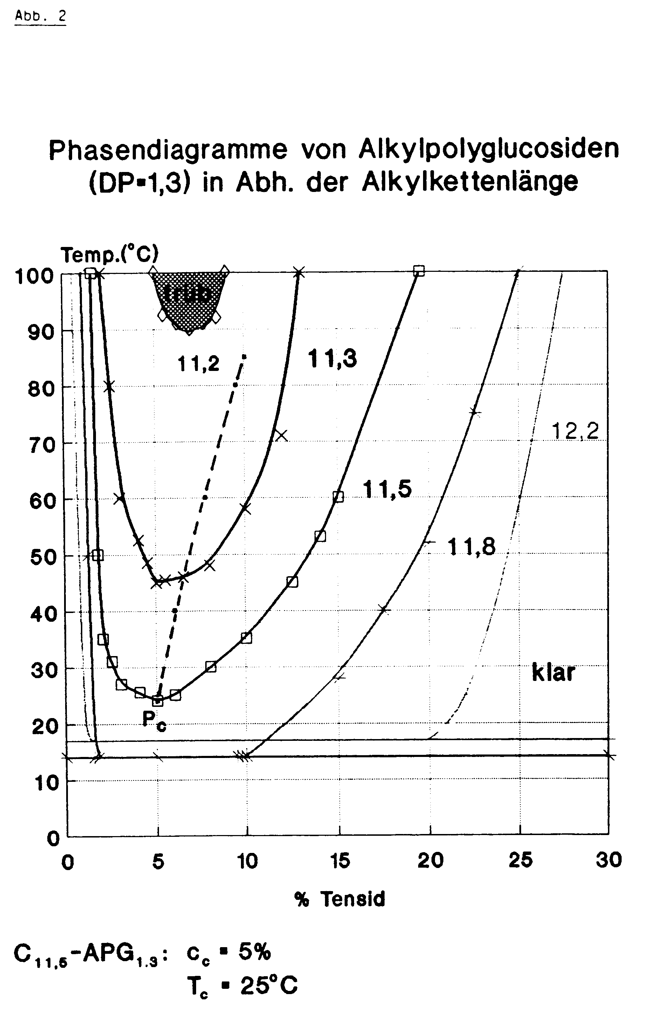

Der hohen Empfindlichkeit der Abhängigkeit vom Glucosidierungsgrad entspricht die analoge Abhängigkeit des Trübungspunktes von der Alkylkettenlänge. Abb. 2 zeigt diesen Effekt. Dargestellt sind die verkürzten Phasendiagramme von Alkylpolyglucosiden mit einem mittleren Glucosidierungsgrad von 1,3 in Abhängigkeit der Alkylkettenlänge. Mit abnehmender Alkylkette wird die zunächst breite Mischungslücke zunehmend schmaler, schließlich trennt sich das Koazervationsgebiet von dem Bereich unterhalb der Krafftpunktkurve, und bei einer Alkylkettenlänge von etwa 11,5 Kohlenstoff-Atomen wird ein unterer kritischer Entmischungspunkt bei 25 °C und einer Konzentration von 5 % als Minimum der Trübungspunktkurve sichtbar. Mit weiterer Verkürzung der Alkylkette auf < 11,2 liegt der untere Entmischungspunkt, d. h, der niedrigste Trübungspunkt bereits oberhalb des üblichen Meßbereichs von 100 °C. Auch hier ergibt sich gegenüber analogen Veränderungen der Oxethylate eine um den Faktor 35 - 40 höhere Empfindlichkeit.

Die üblichen Abhängigkeiten im Trübungspunktverhalten der Oxethylate gegenüber Salzen, Säuren und Laugen (vgl. K. Meguro et al. in M.J. Schick, Nonionic Surfactants, Surfactant Science Ser. 23, 109, New York 1987) sind bei den Alkylpolyglucosiden völlig verschieden. Mit Ausnahme von Laugen, die eine starke Trübungspunkterhöhung zeigen, führen Salze immer zu einer Erniedrigung. Einsalzende Effekte - wohl bekannt bei den Oxethylaten - werden bei den Alkylpolyglucosiden nicht beobachtet.

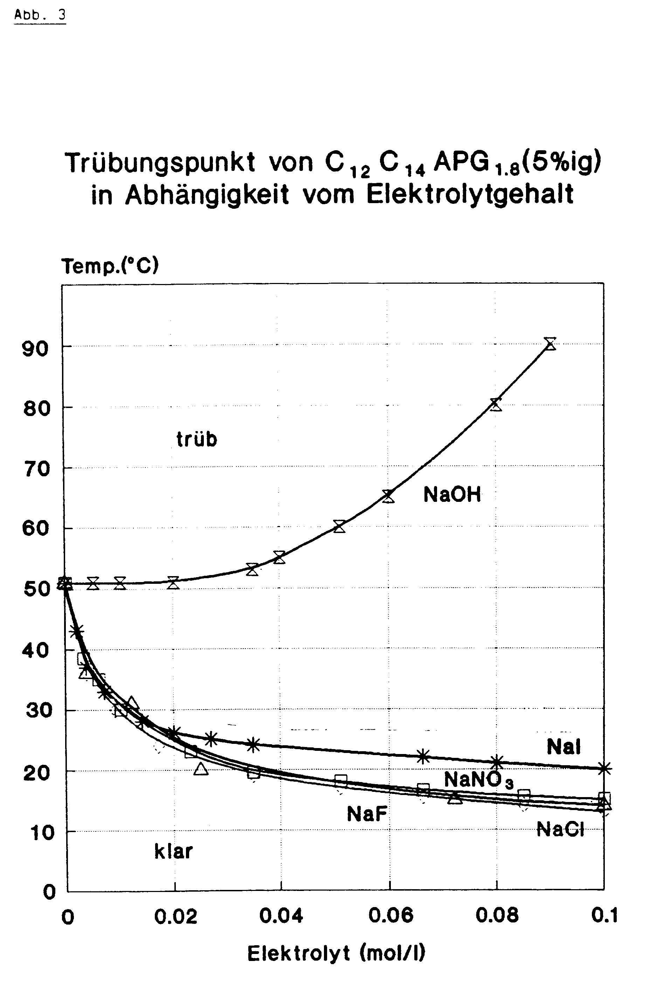

Besonders auffällig ist auch die völlig andere Konzentrationsskala der Elektrolyteffekte. Die Elektrolytempfindlichkeit der Trübungspunkte der Alkylpolyglycoside ist um einen Faktor von etwa 100 stärker als bei den Oxethylaten (vgl. Abb. 3).

Aus alledem folgt bei den Alkylpolyglucosiden ein überraschendes Trübungspunktverhalten, das sich von den bekannten Eigenschaften der Oxethylate völlig unterscheidet. Für analytische Zwecke in Form einer Schnellcharakterisierung ist das beschriebene Verhalten auch nur in wenigen Grenzfällen unmittelbar umsetzbar.

Die Aufgabe der vorliegenden Erfindung besteht nun darin, unsere überraschenden Beobachtungen im Trübungsverhalten der Alkylpolyglucoside in eine Methode zur Schnellcharakterisierung umzusetzen.

Diese Aufgabe wird erfindungsgemäß dadurch gelöst, daß das zu charakterisierende Alkylpolyglycosid entweder mit einem Agens bis zur Klärung bzw. Trübung titriert oder daß nach Additivierung mit einem Agens der Trübungspunkt bestimmt wird.

Gegenstand der Erfindung ist daher eine Methode zur Schnellcharakterisierung von Alkylpolyglycosiden der Formel

R-O-Z_{n,}

in der R für einen linearen oder verzweigten, gesättigten oder ungesättigten Alkylrest mit 8 bis 20 Kohlenstoffatomen und Zₙ für einen (Oligo)glycosylrest mit im Mittel n = 1 bis 5 Hexose- und/oder Pentoseeinheiten oder Gemische davon steht, welche dadurch gekennzeichnet ist, daß man das Alkylpolyglycosid in wäßriger Lösung bis zur Klärung oder Trübung bei festgelegter Temperatur mit einem Agens titriert oder nach Hinzufügen eines Agens den Trübungspunkt bestimmt.

Sinngemäß bezeichnet man die erste Ausführungsart als Klarpunkt- bzw. Trübungspunkttitration, die zweite Ausführungsart ist eine Trübungspunktmessung.

Eine Klarpunkttitration einer trüben wäßrigen Alkylpolyglycosidlösung gelingt mit allen Agenzien, vorzugsweise in wäßriger Lösung, die den Trübungspunkt der Alkylpolyglycoside erhöhen. Dies sind besonders Tenside, vorzugsweise ionische Tenside. Besonders bevorzugt werden anionische Tenside. Geeignet sind ebenfalls Laugen bzw. z. T. auch alkalisch reagierende Salze sowie Lösungsvermittler.

Eine Trübungspunkttitration einer klaren wäßrigen Lösung von Alkylpolyglycosiden gelingt mit allen Agenzien, vorzugsweise in wäßriger Lösung, die den Trübungspunkt erniedrigen. Dies können ebenfalls Tenside und amphiphile Stoffe sein, bevorzugt sind hierbei kationische Tenside. Geeignet sind auch Fettalkohole. Besonders geeignet sind wasserlösliche Salze, wobei der Typ nicht kritisch ist.

Die das zu charakterisierende Alkylpolyglycosid kennzeichnende Maßzahl ist z. B. der Titer des Agens bei festgelegter Temperatur, bzw. nach Festlegung einer für die jeweilige Methode zweckmäßigen Konzentration das verbrauchte Volumen.

Die Verschiebung des Trübungspunktes der Alkylpolyglycoside in den bequem meßbaren Bereich zwischen 0 und 100 °C gelingt mit Tensiden, amphiphilen Substanzen (sofern diese keine Tenside sind), wasserlöslichen Salzen, Laugen, Lösevermittlern, etc.. Besonders geeignet ist die Verschiebung des Trübungspunktes durch Zusatz eines weiteren oder mehrerer weiterer Alkylpolyglycoside, die sich von dem zu charakterisierenden im HLB-Wert unterscheiden. Geeignet sind weiterhin Zusätze an anionischen, kationischen oder auch nichtionischen Tensiden, die bevorzugt als wäßrige Lösung zugesetzt werden. Ebenfalls geeignet sind amphiphile Substanzen, die selbst keine Tenside sind, wie z. B. Fettalkohole, und Salze, Laugen oder Lösevermittler. Als kennzeichnede Größe des zu charakterisierenden Alkylpolyglycosids dient dann das Mengen- bzw. Konzentrationsverhältnis von Alkylpolyglycosid und Agens oder Agenzien sowie der Trübungspunkt.

Erfindungsgemäß zu charakterisierende Alkylpolyglycoside genügen der Formel I

R-O-Zₙ I,

in der R für einen linearen oder verzweigten, gesättigten oder ungesättigten aliphatischen Alkylrest mit 8 bis 20 Kohlenstoffatomen oder Gemische davon und Zₙ für einen Polyglycosylrest mit n = 1 bis 5 Hexose- oder Pentoseeinheiten oder Gemische davon stehen.

Bevorzugt werden Alkylpolyglycoside mit Fettalkylresten mit 8 bis 18 Kohlenstoffatomen sowie einem Polyglycosylrest von n = 1,1 bis 2,5. Besonders bevorzugt sind Alkylpolyglucoside.

Die erfindungsgemäß eingesetzten Alkylpolyglycoside können nach bekannten Verfahren auf Basis nachwachsender Rohstoffe hergestellt werden. Beispielsweise wird Dextrose in Gegenwart eines sauren Katalystors mit n-Butanol zu Butylpolyglycosidgemischen umgesetzt, welche mit langkettigen Alkoholen ebenfalls in Gegenwart eines sauren Katalysators zu den gewünschten Alkylpolyglycosidgemischen umglycosidiert werden.

Die Struktur der Produkte ist in bestimmten Grenzen variierbar. Der Alkylrest R wird durch die Auswahl des langkettigen Alkohols festgelegt. Günstig aus wirtschaftlichen Gründen sind die großtechnisch zugänglichen Tensidalkohole mit 8 bis 20 C-Atomen, insbesondere native Fettalkohole aus der Hydrierung von Fettsäuren bzw. Fettsäurederivaten. Verwendbar sind auch Ziegleralkohole oder Oxoalkohole.

Der Polyglycosylrest Zₙ wird einerseits durch die Auswahl des Kohlenhydrats und andererseits durch die Einstellung eines mittleren Polymerisationsgrades n z. B. nach DE-OS 19 43 689 festgelegt. Im Prinzip können bekanntlich Polysaccharide, z. B. Stärke, Maltodextrine, Dextrose, Galaktose, Mannose, Xylose etc. eingesetzt werden. Bevorzugt sind die großtechnisch verfügbaren Kohlenhydrate Stärke, Maltodextrine und besonders Dextrose. Da die wirtschaftlich interessanten Alkylpolyglycosidsynthesen nicht regio- und stereoselektiv verlaufen, sind die Alkylpolyglycoside stets Gemische von Oligomeren, die - wie oben dargestellt - ihrerseits Gemische verschiedener isomerer Formen darstellen.

Erfindungsgemäß eingesetzte Alkylpolyglycoside lassen sich auch durch Abmischen von Alkylpolyglycosiden mit Alkylmonoglycosiden herstellen. Letztere kann man z. B. nach EP-A-0 092 355 mittels polarer Lösemittel, wie Aceton, aus Alkylpolyglycosiden gewinnen bzw. anreichern.

Alkylpolyglycoside und insbesondere die Alkylpolyglucoside sind besonders umweltfreundlich. Da sie auch anwendungstechnisch ein riesiges Potential besitzen, sind sie von größter Bedeutung, was sich in jüngst errichteten Produktionsanlagen auch dokumentiert.

Die erfindungsgemäß einzusetzenden Agenzien sind
Tenside wie Alkylpolyglycoside, z. B.
Alkylpolyglucoside der Formel

R'-O-Xₘ,

in der R' für einen linearen oder verzweigten, gesättigten oder ungesättigten Alkylrest mit 6 bis 16 C-Atomen und Xₘ für einen Oligoglucosylrest mit im Mittel 1 bis 10 Glucoseeinheiten steht,
oder anionische Tenside wie organische Sulfate, Sulfonate, Ethersulfate, Ethersulfonate, Carboxylate, Ethercarboxylate, Sulfosuccinate, etc.,
oder kationische Tenside,
oder Betaine,
oder Ampholyte,
oder Oxethylate,
wobei die Alkylreste bei den Tensiden so gewählt werden, daß eine ausreichende Wasserlöslichkeit garantiert ist,
oder amphiphile Substanzen, wie z. B. Fettalkohole, Alkylglykole, etc.
oder wasserlösliche Salze,
oder Laugen,
oder Lösevermittler,
sowie geeignete Mischungen der o.a. Stoffe.

Die nachstehenden Beispiele sollen die erfindungsgemäße Methode erläutern:

### Beispiel 1

In einem temperierten Rührgefäß (50 ⁰C) werden 50 ml einer 2.0-%igen trüben Lösung eines C₁₂C₁₆ Alkylpolyglucosids mit einem mittleren Glucosidierungsgrad von 1.3 bei pH 5,0 mit 0,50-%iger wäßriger Lösung eines C₁₂C₁₄-Fettalkoholethersulfat-Natriumsalz mit 2 mol EO/mol titriert. Der Verbrauch bis zum gut erkennbaren Klarpunkt beträgt 4.0 ± 0.2 ml Agenslösung.

### Beispiel 2

Unter völlig gleichen Bedingungen wie in Beispiel 1, jedoch bei 30 °C, werden 50 ml der gleichen Alkylpolyglucosidlösung wie in Beispiel 1 ebenfalls mit einer 0,5-%igen Lösung des gleichen Ethersulfats titriert. Der Klarpunkt wird hier nach einem Verbrauch von 4.1 ml Agenslösung erreicht. Das Ergebnis zeigt den geringen Einfluß der Temperatur.

### Beispiel 3

Unter völlig gleichen Bedingungen wie in Beispiel 1 werden 50 ml der gleichen Alkylpolyglucosidlösung mit einer 0,4-%igen wäßrigen Lösung des gleichen Ethersulfats wie in Beispiel 1 titriert, der Verbrauch bis zum gut erkennbaren Klarpunkt liegt bei 4.9 ± 0.2 ml.
Das Ergebnis im Vergleich zu Beispiel 1 zeigt die Konstanz des Titers.

### Beispiel 4

Unter völlig gleichen Bedingungen wie in Beispiel 1 werden 50 ml einer C₁₂C₁₄-Alkylpolyglucosidlösung mit einem Glucosidierungsgrad von ca. 1.25, dessen physikalische und anwendungstechnische Eigenschaften weitestgehend mit dem in Beispiel 1 genannten übereinstimmen, mit 0,5-%iger wäßriger Lösung von C₁₂C₁₄-Fettalkoholethersulfat-Natriumsalz mit 2 mol EO/mol titriert. Der Verbrauch bis zum gut erkennbaren Klarpunkt beträgt 3.9 ml Agenslösung.
Mit diesem Ergebnis im Vergleich zu Beispiel 1 wird gezeigt, daß die Methode zum Aufzeigen der Substanzidentität geeignet ist.

### Beispiel 5

Unter völlig gleichen Bedingungen wie in Beispiel 1 werden 50 ml einer 2-%igen, trüben C₁₂C₁₄-Alkylpolyglucosidlösung mit einem mittleren Glucosidierungsgrad von 1.6 mit dem gleichen Agens wie in Beispiel 1 titriert. Der Verbrauch bis zum gut erkennbaren Klarpunkt beträgt 1,4 ml Agenslösung.

Der geringere Verbrauch gegenüber Beispiel 4 erklärt sich durch den höheren Glucosidierungsgrad.

### Beispiel 6

Unter völlig gleichen Bedingungen wie in Beispiel 1 werden 50 ml der in Beispiel 1 genannten Alkylpolyglucosidlösung mit 0,5-%iger C₁₂C₁₄-Alkylsulfat-Na.-Lösung titriert. Der Verbrauch bis zum gut erkennbaren Klarpunkt beträgt 3.6 ml.

### Beispiel 7

In einem temperierten Rührgefäß werden 50 ml einer klaren, 1-%igen, wäßrigen C₁₀C₁₂-Alkylpolyglucosidlösung mit einem Glucosidierungsgrad von 1.2 bis zur Trübung mit 5-%iger NaCl-Lösung titriert. Der Verbrauch liegt bei 5.5 ml.

### Beispiel 8

Unter Bedingungen wie in Beispiel 7 werden der gleichen Alkylpolyglucosidlösung 0,85 % CaCl₂ zugesetzt und die hierdurch trüb gewordene Lösung mit 0,5-%iger wäßriger Lösung eines C₁₂C₁₄-Fettalkoholethersulfat-Natriumsalz mit 2 mol EO/mol titriert. Der Verbrauch bis zum gut erkennbaren Klarpunkt beträgt 4.7 ml Agenslösung.

### Beispiel 9

Der Trübungspunkt eines C₁₂C₁₆-Alkylpolyglucosids mit einem Glucosidierungsgrad von 1.3 (vgl. Beispiel 1) liegt unterhalb des Krafftpunktes und ist daher nicht meßbar. Vermischt man dieses Produkt bei pH 5,0 im Verhältnis 6 : 16 mit einem C₁₀C₁₂-Alkylpolyglucosid (D.P. = 1.2), so wird bei 5-%iger wäßriger Lösung ein Trübungspunkt von 52 °C beobachtet. Bei der gleichen Temperatur wird die Lösung beim Abkühlen auch wieder klar.

Der völlig analoge Versuch mit dem Alkylpolyglucosid in Beispiel 4 führt zu einem Trübungspunkt von 47 °C. Von ihrem sonstigen Verhalten fast identische Produkte differieren also durchaus merklich in ihren Trübungspunkten, wodurch die sehr hohe Empfindlichkeit dieser Methode aufgezeigt wird.

### Beispiel 10

Der Trübungspunkt von C₁₂C₁₄-Alkylpolyglucosid mit einem Glucosidierungsgrad von ca. 1.6 liegt ebenfalls unterhalb des Krafftpunktes und ist daher nicht meßbar. Vermischt man dieses Produkt bei pH 5,0 im Verhältnis 6 : 16 mit dem gleichen Agens wie in Beispiel 9, so liegt der Trübungspunkt der 5-%igen Lösung oberhalb 100 °C. Ein geringerer Anteil des Agens führt hingegen zu einem bequem meßbaren Trübungspunkt.

### Beispiel 11

Der Trübungspunkt von Plantaren ^{R}600, einem C₁₂C₁₆-Alkylpolyglucosid mit einem Glucosidierungsgrad von ca. 1.4, liegt unterhalb der Krafftpunktkurve und ist daher nicht meßbar. Vermischt man das Produkt bei pH 5,0 mit einem C₁₀C₁₂-Alkylpolyglucosid (D.P. = 1.2) im Verhältnis 1 : 1, so wird bei der 5-%igen Lösung ein Trübungspunkt von 68 °C gemessen.

### Beispiel 12

Im Verhältnis 12.5 zu 7.5 werden das C₁₂C₁₆-Alkylpolyglucosid des Beispiels 9 und C₈C₁₀-Alkylpolyglucosid mit einem Glucosidierungsgrad von ca. 1.2 bei pH 5,0 miteinander vermischt. Der Trübungspunkt der 5-%igen wäßrigen Lösung liegt bei 52 °C.

## Patentansprüche

1. Methode zur Schnellcharakterisierung von Alkylpolyglycosiden der Formel
R-O-Z_{n,}
in der R für einen linearen oder verzweigten, gesättigten oder ungesättigten Alkylrest mit 8 bis 20 Kohlenstoffatomen und Zₙ für einen (Oligo)glycosylrest mit im Mittel n = 1 bis 5 Hexose- und/oder Pentoseeinheiten oder Gemische davon steht,
dadurch gekennzeichnet,
daß man das Alkylpolyglycosid in wäßriger Lösung bis zur Klärung oder Trübung bei festgelegter Temperatur mit einem Agens titriert oder nach Hinzufügen eines Agens den Trübungspunkt bestimmt.

2. Methode nach dem Anspruch 1,
dadurch gekennzeichnet,
daß das Alkylpolyglycosid auch synthesebedingte Begleitsubstanzen wie Fettalkohole, Monosaccharide, Oligosaccharide, niedere Alkylpolyglycoside und Salze enthalten kann.

3. Methode nach den Ansprüchen 1 und 2,
dadurch gekennzeichnet,
daß das Alkylpolyglycosid ein Alkylpolyglucosid ist, in der R 8 bis 18 Kohlenstoffatome und n 1,1 bis 2,5 bedeuten.

4. Methode nach Anspruch 1,
gekennzeichnet dadurch,
daß als Agens ein Tensid oder Tensidgemisch verwendet wird.

5. Methode nach den Ansprüchen 1 und 4,
dadurch gekennzeichnet,
daß als Tensid ein Alkylpolyglucosid der Formel
R'-O-Xₘ
eingesetzt wird, in der R' für einen linearen oder verzweigten, gesättigten oder ungesättigten Alkylrest mit 6 bis 16 C-Atomen und Xₘ für einen Oligoglucosylrest mit im Mittel 1 bis 10 Glucoseeinheiten steht.

6. Methode nach den Ansprüchen 1 und 5,
dadurch gekennzeichnet,
daß sich das zu charakterisierende Alkylpolyglycosid und das als Agens verwendete Alkylpolyglucosid in ihrer Hydrophilie unterscheiden.

7. Methode nach den Ansprüchen 1 und 4
dadurch gekennzeichnet,
daß als Agens ein anionisches Tensid verwendet wird.

8. Methode nach Anspruch 1,
dadurch gekennzeichnet,
daß als Agens eine Lauge verwendet wird.

9. Methode nach den Ansprüchen 1 bis 8,
dadurch gekennzeichnet,
daß gleichzeitig zu den Agenzien Elektrolyte, ein- oder mehrwertige Alkohole sowie deren Gemische zugesetzt werden können.

10. Methode nach Anspruch 1,
dadurch gekennzeichnet,
daß als Agens ein Salz- oder Salzgemisch verwendet wird.
